# EUROPEAN PATENT APPLICATION

(11) **EP 1 607 461 A1**
(43) Date of publication of application: **21.12.2005**
(21) Application number: 04714919.0
(22) Date of filing: 26.02.2004
(51) Int. Cl.: C09K 11/56, C09K 11/59, C09K 11/79, C09K 11/08, H01J 29/20, H01J 31/12

(54) **GREEN LIGHT EMITTING PHOSPHOR FOR LOW VOLTAGE/HIGH CURRENT DENSITY AND FIELD EMISSIION TYPE DISPLAY INCLUDING THE SAME**

(30) Priority: 28.02.2003 JP 2003054732
(71) Applicant: KABUSHIKI KAISHA TOSHIBA, Tokyo 105-8001 (JP)
(72) Inventor: YOKOSAWA, Nobuyuki, Toshiba Corporationty Division, Minato-ku, Tokyo 105-8001 (JP); ITO, Takeo, Toshiba Corporationty Division, Minato-ku, Tokyo 105-8001 (JP); OYAIZU, Tsuyoshi, Toshiba Corporationty Division, Minato-ku, Tokyo 105-8001 (JP); MATSUURA, Susumu, Yokohama-shi, Kanagawa 244-0841 (JP); YAMAGUCHI, Kenichi, Toshiba Corporation, Minato-ku, Tokyo 105-8001 (JP); TAKENAKA, Shigeo, Toshiba Corporation, Minato-ku, Tokyo 105-8001 (JP)
(74) Representative: HOFFMANN EITLE
(86) International application number: PCT/JP2004/002265
(87) International publication number: WO 2004/076587

(57) **Abstract**

This green light emitting phosphor for a device of low voltage/high current density includes at least one kind of phosphor selected from (a) a zinc silicate phosphor containing manganese as an activator, (b) a rare earth element silicate phosphor containing terbium as an activator, and (c) a zinc sulfide phosphor with a hexagonal crystal structure, containing copper and aluminum as activators. In a color display device such as a FED, it is possible to improve light emission color of a green phosphor and increase luminance while keeping sufficient chromaticity.

## Description

### Technical Field

The present invention relates to a green light emitting phosphor for a device of low voltage/high current density and a field emission display device including the same.

### Background Art

With the coming of the multimedia age, a larger screen, higher definition, compatibility to various sources such as a computer, and the like are being required of a display device that is to be a core device of a digital network.

In display devices, a field emission display (FED) including an electron emitting element such as a field-emission cold-cathode element has recently been under active research and development, as a large-screen, thin digital device capable of displaying various kinds of information with high precision and high definition.

The basic display principle of the FED is to excite a phosphor by an electron beam for light emission, which is the same as that of a cathode ray tube (CRT). However, acceleration voltage (excitation voltage) of the electron beam in the FED is 3 to 15 kV, which is lower than that in the CRT, and current density by the electron beam is high, and therefore, sufficient progress has not been made in the research on a phosphor for such a FED.

The FED is generally classified into two kinds, namely, a high-voltage FED with the excitation voltage of 5 kV to 15 kV and a low-voltage FED with excitation voltage lower than 5 kV, and a phosphor in the high-voltage FED is thought to have a light emitting characteristic that is close to a light emitting characteristic in the CRT, but at present, sufficient knowledge has not been obtained on the light emitting characteristic of the phosphor under high current density excitation.

Since a high current density electron beam for exciting a phosphor layer is used in the FED, phosphors constituting the phosphor layer need to have resistance to the high current density electron beam. It is known that luminance deterioration and the like caused by the impact of the electron beam can be suppressed when a zinc sulfide phosphor for green light emission (ZnS:Cu, Au, Al (blending of Au is optional)) has a crystal structure of a hexagonal system instead of a cubic system (see, for example, Japanese Patent Laid-open Application No. 2002-226847).

As described above, the zinc sulfide phosphor with the hexagonal system is effective for suppressing luminance deterioration and the like caused by the high current dens ity electron beam, but has a problem that color of light emission thereof deviates toward a shorter-wavelength side. The fluctuation in color of light emission remarkably occurs in a zinc sulfide phosphor for green light emission, and therefore, there is a strong demand for realizing a green light emitting phosphor for a FED with high luminance and high color purity.

In particular, in order to increase white luminance, increasing luminance of the green light emitting phosphor is the most important, and there is a demand for increased luminance as well as enhanced color purity (chromaticity) of highly visible green.

The present invention was made in order to solve such problems, and its object is to improve color of light emission and increase luminance while keeping sufficient chromaticity, in a green light emitting phosphor used in a display device such as a field emission display device (FED). It is another object thereof to cope with higher current density of an electron beam exciting a phosphor layer, by using such a green light emitting phosphor, to thereby provide a filed emission display device (FED) with improved display characteristics such as color reproducibility and higher reliability.

### Disclosure of the Invention

A first aspect of the present invention is a green light emitting phosphor for a device of low voltage/high current density, comprising at least one kind of phosphor selected from (a) a zinc silicate phosphor containing manganese as an activator, (b) a rare earth element silicate phosphor containing terbium as an activator, and (c) a zinc sulfide phosphor with a hexagonal crystal structure, containing copper and aluminum as activators.

A second aspect of the present invention is a green light emitting phosphor for a device of low voltage/high current density, comprising at least two kinds of phosphors selected from (a) a zinc silicate phosphor containing manganese as an activator, (b) a rare earth element silicate phosphor containing terbium as an activator, and (c) a zinc sulfide phosphor with a hexagonal crystal structure, containing copper and aluminum as activators.

A third aspect of the present invention is a green light emitting phosphor for a device of low voltage/high current density, comprising (a) a zinc silicate phosphor containing manganese as an activator, (b) a rare earth element silicate phosphor containing terbium as an activator, and (c) a zinc sulfide phosphor with a hexagonal crystal structure, containing copper and aluminum as activators.

A fourth aspect of the present invention is a field emission display device comprising a phosphor layer having a blue light emitting phosphor layer, a green light emitting phosphor layer, and a red light emitting phosphor layer, an electron source irradiating the phosphor layer with an electron beam whose acceleration voltage is 15 kV or lower and current density is 1 µA/cm² or higher, to excite the phosphor layer, and an envelope vacuum-seal ing the electron source and the phosphor layer, wherein the green light emitting phosphor layer includes any one of the aforesaid green light emitting phosphors for a device of low voltage/high current density.

### Brief Description of Drawings

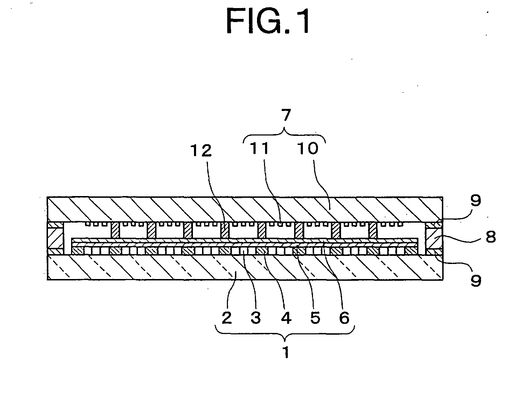

FIG. 1 is a cross-sectional view showing a structure example of a field emission display (FED) which is one embodiment of the present invention.

### Best Mode for Implementing the Invention

Hereinafter, embodiments of the present invention will be described. It should be noted that the present invention is not limited to the embodiments described below.

A first embodiment of the present invention is a green light emitting phosphor for a device of low voltage/high current density, including at least one kind of phosphor selected from (a) a zinc silicate phosphor activated with manganese, (b) a rare earth element silicate phosphor activated with terbium, and (c) a zinc sulfide phosphor activated with copper and aluminum having a hexagonal crystal structure. This phosphor emits green light when irradiated with an electron beam whose acceleration voltage is 15 kV or lower (for example, 3 to 15 kV) and current density is 1 µA/cm² or higher, and is suitably used as a phosphor for a field emission display (FED).

Further, a second embodiment is a green light emitting phosphor for a device of low voltage/high current density, including at least two kinds of phosphors selected from (a) a zinc silicate phosphor activated with manganese, (b) a rare earth element silicate phosphor activated with terbium, and (c) a zinc sulfide phosphor activated with copper and aluminum having a hexagonal crystal structure. This phosphor also emits green light when irradiated with an electron beam whose acceleration voltage is 15 kV or lower and current density is 1 µA/cm² or higher, and is used as a phosphor for a FED.

Further, a third embodiment is a green light emitting phosphor for a device of low voltage/high current density that emits green light when irradiated with an electron beamwhos e acceleration voltage is 15 kV or lower and current density is 1 µA/cm² or higher. The green light emitting phosphor includes three kinds of phosphors, namely, (a) a zinc silicate phosphor activated with manganese, (b) a rare earth element silicate phosphor activated with terbium, and (c) a zinc sulfide phosphor activated with copper and aluminum having a hexagonal crystal structure. This phosphor is also suitable as a phosphor for a FED.

Note that in these first to third embodiments, yttrium silicate is used as silicate of a rare earth element which is a crystal host material of (b). Further, in the second and third embodiments, in order to improve chromaticity and realize higher luminance, a content ratio of at least one of (a) the zinc silicate phosphor activated with manganese and (b) the yttrium silicate phosphor activated with terbium relative to the whole green light emitting phosphor is preferably equal to or higher than a content ratio of (c) the zinc sulfide phosphor activated with copper and aluminum having the hexagonal crystal structure.

A concrete example of (a) the zinc silicate phosphor activated with manganese is a phosphor having a composition substantially expressed by a formula: Zn₂SiO₄: Mn. Here, an amount of the Mn activator is preferably within a range from 0.1 to 15 mol% relative to the host material (Zn₂SiO₄) of the phosphor in order to obtain good chromaticity of light emission and high luminance.

A concrete example of (b) the yttrium silicate phosphor activated with terbium is a phosphor having a composition substantially expressed by a formula: Y₂SiO₅: Tb. Here, an amount of the Tb activator is preferably within a range from 0.1 to 20 mol% relative to the host material (Y₂SiO₅) of the phosphor in order to obtain good chromaticity of light emission and high luminance.

The zinc silicate phosphor activated with manganese (Zn₂SiO₄: Mn) being the (a) component and the yttrium silicate phosphor activated with terbium (Y₂SiO₅: Tb) being the (b) component can both be produced by a known baking method.

Specifically, a predetermined amount of powder of each material is first measured according to the aforesaid composition, and after these materials together with a flux are fully mixed using a ball mill or the like, a resultant material mixture is contained in an alumina crucible or the like to be baked at a temperature of 1200 to 1400°C for about two to six hours in the atmosphere. Here, as the powder of each material, not only an oxide but also carbonate, nitrate, oxalate, hydroxide, or the like that can easily decompose into an oxide when heated is usable.

In producing the yttrium silicate phosphor activated with terbium, the resultant baked substance is fully washed with pure water (or warm pure water) to remove an unnecessary soluble component, and after the washed substance is filtrated and dried, it is contained in an alumina crucible or the like to be baked at a temperature of 1200 to 1500°C for about two to six hours in a reducing atmosphere. Then, after this baked substance is pulverized to minute particles, it is washed with pure water to remove an unnecessary soluble component, and is further filtrated and dried, so that an intended phosphor can be obtained.

A concrete example of (c) the zinc sulfide phosphor activated with copper and aluminum having the hexagonal crystal structure is a phosphor having a composition substantially expressed by a formula: ZnS: Cu, Al.

Incidentally, the zinc sulfide phosphor with the hexagonal crystal structure is superior in anti-deterioration property owing to its crystal structure, and can therefore suppress time-dependent luminance deterioration and the like caused by an irradiation impact of an electron beam even when it is repeatedly irradiated with, for example, a high current density electron beam. In order to obtain such an effect of suppressing the luminance deterioration caused by the impact of the electron beam, a ratio of hexagonal crystals in the crystal structure of zinc sulfide is preferably 50% or higher. When the ratio of the hexagonal crystals is less than 50%, satisfactory impact resistance to the electron beam cannot be obtained. The ratio of the hexagonal crystals in the crystal structure is preferably 80% or higher, and more preferably, 95% or higher, and it is especially preferable that substantially the whole crystal structure is a hexagonal system.

Cu is a first activator (main activator) being the center of light emission, and its content in 1g zinc sulfide being the host material of the phosphor is preferably in a range from 1 × 10⁻⁵ to 1 × 10⁻³g. The content of Cu, which is the first activator, less than 1 × 10⁻⁵g and more than 1 × 10⁻³g in the 1g zinc sulfide results in lowered luminance of light emission and lowered chromaticity of light emission. The Cu content is more preferably in a range from 3 × 10⁻⁵ to 8 × 10⁻⁴g, and still more preferably, in a range from 5 × 10⁻⁵ to 5 × 10⁻⁴g, in the 1g zinc sulfide.

A1 is a second activator (coactivator) directly excited by the electron beam, and light emission of the first activator caused by excitation energy of such a second coactivator can increase luminance of light emission of the zinc sulfide phosphor (for example, a ZnS: Cu phosphor). The content of A1 being the second activator in the 1g zinc sulfide being the host material of the phosphor is preferably in a range from 1 × 10⁻⁵ to 5 × 10⁻³g. The A1 content less than 1 × 10⁻⁵g and more than 5 × 10⁻³g in the 1g zinc sulfide results in lowered luminance of light emission and lowered chromaticity of light emission. The Al content in the 1g zinc sulfide is preferably in a range from 3 × 10⁻⁵ to 3 × 10⁻³g, and more preferably, in a range from 5 × 10⁻⁵ to 1 × 10⁻³g.

The zinc sulfide phosphor activated with copper and aluminum having the hexagonal crystal structure which is the (c) component is produced in, for example, the following manner.

First, a predetermined amount of an activator material is added to a zinc sulfide material being the host material of the phosphor, a flux such as potassium chloride or magnesium chloride is added thereto when necessary, and they are wet-mixed. Specifically, the phosphor material is dispersed in ion exchange water to form a slurry substance, and given amounts of the activator material and the flux are added thereto, and they are mixed in a stirrer. The mixing time is set long enough for the activator to fully disperse. Next, the slurry containing the phosphor material, the activator material, and so on is transferred to a drying container and dried by a drier, and the resultant is used as a phosphor material.

Next, this phosphor material is filled in a heat-resistant container such as a quartz crucible together with appropriate amounts of sulfur and activated carbon, At this time, it is preferable that the sulfur is mixed with the dried phosphor material for, for example, about 30 to 180 minutes by using a blender or the like, and after the mixed material is filled in the heat-resistant container, a surface thereof is covered with the sulfur. This is baked in a sulfide atmosphere such as a hydrogen sulfide atmosphere or a sulfur vapor atmosphere, or in a reducing atmosphere (for example, an atmosphere with 3 to 5% hydrogen - the remaining portion of nitrogen). Baking conditions are important for controlling the crystal structure of the host material (ZnS) of the phosphor. In order to obtain the intended hexagonal crystal structure, the baking temperature is preferably set in a range from 1050 to 1230°C. The baking time, though depending on the baking temperature, is preferably 30 to 360 minutes. Too short a baking time may possibly result in a mixed crystal of a hexagonal crystal and a cubic crystal. Cooling after the baking is preferably quenching in order to prevent a phase change from the hexagonal crystal to the cubic crystal.

Next, after the resultant baked substance is washed with ion exchange water or the like and dried, sieving for removing coarse particles and so on are performed when necessary, so that the zinc sulfide phosphor (ZnS: Cu, Al) having the hexagonal crystal structure is obtained.

In the second and third embodiments of the present invention, the green light emitting phosphor for a display device can be obtained by mixing two kinds or more out of three kinds of the phosphors, the three kinds of the phosphors being (a) the zinc silicate phosphor activated with manganese, (b) the yttrium silicate phosphor activated with terbium, and (c) the zinc sulfide phosphor with the hexagonal crystal structure. Then, using such a phosphor mixture or one kind of the phosphor according to the first embodiment, a green light emitting phosphor layer can be formed by a known slurry method or printing method.

According to the green light emitting phosphor of the embodiments, when it is used in a field emission display (FED) in which it is excited by a high current density electron beam, time-dependent luminance deterioration of the green light emitting phosphor can be suppressed, so that it is possible to increase luminance while satisfying color of light emission (chromaticity of light emission) required for a green light emitting component for a FED. In other words, it is possible to stably obtain high-luminance green light emission that has chromaticity high enough to satisfy the level required for the green light emitting component for a FED.

Next, a field emission display (FED) in which the green light emitting phosphors of the present invention is used to constitute a green phosphor layer will be described.

FIG. 1 is a cross-sectional view showing a structure of a major portion of one embodiment of such a field emission display (FED).

In FIG. 1, the reference numeral 1 denotes a face plate, which has a phosphor layer 3 formed on a transparent substrate such as a glass substrate 2. The phosphor layer 3 has blue light emitting phosphor layers, green light emitting phosphor layers, and red light emitting phosphor layers which are formed to correspond to pixels, and these phosphor layers are separated from one another by light absorbing layers 4 comprised of a black conductive material. Of the phosphor layers of the respective colors constituting the phosphor layer 3, the green light emitting phosphor layer is constituted by the green light emitting phosphor of any one of the above-described first to third embodiments. The blue light emitting phosphor layer and the red light emitting phosphor layer can be constituted by various kinds of known phosphors.

The above-described blue light emitting phosphor layers, green light emitting phosphor layers, red light emitting phosphor layers, and light absorbing layers 4 separating these layers are repeatedly arranged in sequence in a horizontal direction, and a portion where these phosphor layer 3 and light absorbing layers 4 exist is an image display area. Various patterns such as a dotted pattern, a stripe pattern, and the like are applicable to an arrangement pattern of the phosphor layer 3 and the light absorbing layers 4.

A metal back layer 5 is formed on the phosphor layer 3. The metal back layer 5 is comprised of a metal film such as an Al film and is formed to increase luminance by reflecting light traveling in a direction of a later-described rear plate, out of lights generated in the phosphor layer 3.

The metal back layer 5 has a function of giving conductivity to the image display area of the face plate 1 to prevent charge accumulation, and plays a role of an anode electrode for an electron source (electron emitting source) of the rear plate. Further, the metal back layer 5 has a function of preventing the phosphor layer 3 from being damaged by ions that are generated when gas staying in the face plate 1 and the vacuum container (envelope) is ionized by the electron beam, and it also provides an effect such as preventing gas generated from the phosphor layer 3 in use from being discharged into the vacuum container (envelope), thereby preventing vacuum degree from lowering.

A getter film 6 formed of an evaporation- type getter material including Ba or the like is formed on the metal back layer 5. This getter film 6 efficiently adsorbs the gas generated at the time of usage.

The face plate 1 as described above and the rear plate 7 are arranged to face each other and a space therebetween is airtightly sealed with a support frame 8. The support frame 8 is joined to the face plate 1 and the rear plate 7 by a frit glass or a joining member 9 comprised of In, its alloy, or the like, and these face plate 1, rear plate 7, and support frame 8 form the vacuum container as the envelope.

The rear plate 7 has a substrate 10 including an insulating substrate such as a glass substrate or a ceramic substrate, a Si substrate, or the like; and a large number of electron emitting elements 11 formed on this substrate 10. These electron emitting elements 11 include, for example, field-emission cold cathodes, surface conduction type electron emitting elements, and so on, and not-shown wiring is formed on a surface of the rear plate 7 on which the electron emitting elements 11 are formed. Specifically, a large number of the electron emitting elements 11 are arranged in a matrix so as to correspond to the phosphors of the respective pixels, and have the wiring lines (X-Y wiring lines) intersecting one another for driving, row by row, the electron emitting elements 11 arranged in a matrix. Incidentally, the support frame 8 has not-shown signal input terminals and row selection terminals. These terminals correspond to the aforesaid intersecting wiring lines (X-Y wiring lines) of the rear plate 7. When a flat FED is increased in size, deflection may possibly occur due to its thin plat shape. In order to prevent such deflection and to give strength against the atmosphere, a reinforcing member (atmosphere supporting member, a spacer) 12 may be appropriately disposed between the face plate 1 and the rear plate 7.

This color FED uses the green light emitting phosphor for the display of the present invention as the green light emitting phosphor layer that emits light by electron beam irradiation, so that it is possible to improve display characteristics such as initial luminance and color reproducibility.

As has been described hitherto, according to the green light emitting phosphor for a device of low voltage/high current density of the present invention, it is possible to improve color of its light emission and to increase luminance while keeping sufficient chromaticity. Therefore, the use of such a green light emitting phosphor makes it possible to cope with higher current density of an electron beam exciting a phosphor layer, so that it is possible to provide a field emission display (FED) with improved display characteristics such as color reproducibility and higher reliability.

Next, examples of the present invention will be described.

### Examples 1 to 10

Three components, namely, (a) a zinc silicate phosphor activated with manganese (Zn₂SiO₄: Mn) and (b) a yttrium silicate phosphor activated with terbium (Y₂SiO₅: Tb) which were produced by the known baking method and (c) a zinc sulfide phosphor having a hexagonal crystal structure (ZnS: Cu, Al) which was produced by the aforesaid method were mixed according to the weight composition shown in Table 1, thereby preparing phosphor mixtures. Note that in the prepared phosphors according to the examples 1 to 3, each of the content ratios of (c) the zinc sulfide phosphor having the hexagonal crystal structure (ZnS: Cu,Al), (a) the zinc silicate phosphor activated with manganese (Zn₂SiO₄: Mn); and (b) the yttrium silicate phosphor activated with terbium (Y₂SiO₅: Tb) was 100%.

Next, using the phosphors or the phosphor mixtures prepared in the examples 1 to 10, respective phosphor layers were formed by a slurry method. Further, as a comparative example, a phosphor layer was formed using a zinc sulfide phosphor having the cubic crystal structure (ZnS: Cu, Al). In forming the phosphor layers, each of the phosphors or the phosphor mixtures with the composition shown in Table 1 was dispersed in an aqueous solution containing polyvinyl alcohol and so on to form slurry, and this slurry was applied on a glass substrate with a spin coater. The rotation speed of the spin coater and the viscosity of the slurry were adjusted so that each of the phosphor layers came to have a film thickness of 3 × 10⁻³ mg/mm³.

Next, luminance of light emission and chromaticity of light emission of each of the phosphor layers were examined. The luminance of light emission was measured under conditions that each of the phosphor layers was irradiated with an electron beam with acceleration voltage of 10 kV and current density of 2 × 10⁻⁵ A/mm². Then, each luminance of light emission was calculated as a relative value to the luminance of the phosphor layer according to the comparative example, which was defined as 100.

For measuring the chromaticity of light emission, a chromaticity measuring instrument "SR-3" manufactured by TOPCON was used. The chromaticity of light emission was measured in a dark room where chromaticity at the light emission was not subject to an external influence. Table 1 shows the measurement results of the luminance of light emission and the chromaticity of light emission.

**[Table 1]**

| | phosphor used [wt%] | | | luminance of light emission [%] | chromaticity of light emission (x, y) |
|---|---|---|---|---|---|
| | hexagonal ZnS:Cu,Al | Zn₂SiO₄:Mn | Y₂SiO₅:Tb | | |
| Example 1 | 100 | 0 | 0 | 100 | (0.19, 0.52) |
| Example 2 | 0 | 100 | 0 | 140 | (0.21, 0.71) |
| Example 3 | 0 | 0 | 100 | 160 | (0.33, 0.57) |
| Example 4 | 0 | 50 | 50 | 150 | (0.27, 0.64) |
| Example 5 | 50 | 0 | 50 | 130 | (0.26, 0.54) |
| Example 6 | 50 | 50 | 0 | 120 | (0.20, 0.62) |
| Example 7 | 30 | 35 | 35 | 130 | (0.23, 0.60) |
| Example 8 | 0 | 60 | 40 | 145 | (0.26, 0.65) |
| Example 9 | 30 | 70 | 0 | 130 | (0.20, 0.65) |
| Example 10 | 30 | 0 | 70 | 140 | (0.29, 0.56) |
| Comparative Example | cubic ZnS:Cu, Al | | | 100 | (0.29, 0.55) |

As is apparent from Table 1, under the condition where the phosphors are irradiated with a low-acceleration voltage (15 kV or lower), high current density electron beam, the green light emitting phosphors obtained in Examples 1 to 10 exhibit improved color of light emission and good chromaticity of light emission, compared with those in the comparative example. In addition, it is seen that luminance is greatly improved.

### Example 11

A phosphor layer including the green light emitting phosphors obtained in Example 4, blue light emitting phosphors (ZnS: Ag, Al phosphors), and red light emitting phosphors (Y₂O₂S: Eu phosphors) was formed on a glass substrate to form a face plate. This face plate and a rear plate having a large number of electron emitting elements were assembled with a support frame, and a space formed thereby was airtightly sealed while being exhausted to vacuum. It has been confirmed that a FED thus obtained is superior in color reproducibility and further exhibits good display characteristics even after being driven at a room temperature for 1000 hours under rated operating conditions.

### Industrial Applicability

As has been described hitherto, according to the green light emitting phosphor for a device of low voltage/high current density of the present invention, it is possible to improve color of its light emission and increase luminance while keeping sufficient chromaticity. Therefore, the use of such a green light emitting phosphor makes it possible to cope with higher current density of an electron beam exciting a phosphor layer, so that it is possible to realize a field emission display (FED) with improved display characteristics such as color reproducibility and higher reliability.

## Claims

1. A green light emitting phosphor for a device of low voltage/high current density, comprising:
at least one kind of phosphor selected from
(a) a zinc silicate phosphor containing manganese as an activator,
(b) a rare earth element silicate phosphor containing terbium as an activator, and
(c) a zinc sulfide phosphor with a hexagonal crystal structure, containing copper and aluminum as activators.

2. The green light emitting phosphor for a device of low voltage/high current density as set forth in claim 1, wherein the green light emitting phosphor is excited by an electron beam whose acceleration voltage is 15 kv or lower and current density is 1 µA/cm² or higher to emit green light.

3. A green light emitting phosphor for a device of low voltage/high current density, comprising:
at least two kinds of phosphors selected from
(a) a zinc silicate phosphor containing manganese as an activator,
(b) a rare earth element silicate phosphor containing terbium as an activator, and
(c) a zinc sulfide phosphor with a hexagonal crystal structure, containing copper and aluminum as activators.

4. The green light emitting phosphor for a device of low voltage/high current density as set forth in claim 3, wherein the green light emitting phosphor is excited by an electron beam whose acceleration voltage is 15 kV or lower and current density is 1 µA/cm² or higher to emit green light.

5. The green light emitting phosphor for a device of low voltage/high current density as set forth in claim 3, wherein a content ratio of at least one of (a) the zinc silicate phosphor containing manganese as the activator and (b) the rare earth element silicate phosphor containing terbium as the activator is equal to or higher than a content ratio of (c) the zinc sulfide phosphor with the hexagonal crystal structure, containing copper and aluminum as the activators.

6. A green light emitting phosphor for a device of low voltage/high current density, comprising:
(a) a zinc silicate phosphor containing manganese as an activator;
(b)a rare earth element silicate phosphor containing terbium as an activator; and
(c) a zinc sulfide phosphor with a hexagonal crystal structure, containing copper and aluminum as activators.

7. The green light emitting phosphor for a device of low voltage/high current density as set forth in claim 6, wherein the green light emitting phosphor is excited by an electron beam whose acceleration voltage is 15 kV or lower and current density is 1 µA/cm² or higher to emit green light.

8. The green light emitting phosphor for a device of low voltage/high current density as set forth in claim 6, wherein a content ratio of at least one of (a) the zinc silicate phosphor containing manganese as the activator and (b) the rare earth element silicate phosphor containing terbium as the activator is equal to or higher than a content ratio of (c) the zinc sulfide phosphor with the hexagonal crystal structure, containing copper and aluminum as the activators.

9. A field emission display device comprising:
a phosphor layer having a blue light emitting phosphor layer, a green light emitting phosphor layer, and a red light emitting phosphor layer;
an electron source irradiating the phosphor layer with an electron beam whose acceleration voltage is 15 kV or lower and current density is 1 µA/cm² or higher, to excite the phosphor layer; and
an envelope vacuum-sealing the electron source and the phosphor layer, wherein the green light emitting phosphor layer includes the green light emitting phosphor for a device of low voltage/high current density as set forth in any one of claims 1 to 8.
